Europäisches Patentamt

European Patent Office

Office européen des brevets

(11) Publication number: **0 380 842**
**A2**

(12) **EUROPEAN PATENT APPLICATION**

(21) Application number: 89306534.2

(51) Int. Cl.⁵: **G06F 12/08**

(22) Date of filing: 27.06.89

(30) Priority: **03.02.89 US 306837**

(43) Date of publication of application:
**08.08.90 Bulletin 90/32**

(84) Designated Contracting States:
**AT BE CH DE ES FR GB GR IT LI LU NL SE**

(71) Applicant: **DIGITAL EQUIPMENT CORPORATION**
**111 Powdermill Road**
**Maynard Massachusetts 01754-1418(US)**

(72) Inventor: **Arnold, Scott**
**5, Dodge Road**
**Sutton, MA 01527(US)**
Inventor: **Delahunt, Stephen J.**
**P.O. Box 165**
**Harvard, MA 01451(US)**
Inventor: **Flynn, Michael E.**
**3, West View Street**
**Grafton, MA 01519(US)**
Inventor: **Hetherington, Ricky C.**
**177 Indian Meadows**
**Northboro, MA 01532(US)**
Inventor: **Ahmed, Mohamed Baser-Uddin**
**8, Gaskill Circle**
**Hopedale, MA 01747(US)**

(74) Representative: **Maggs, Michael Norman et al**
**Kilburn & Strode 30 John Street**
**GB-London WC1N 2DD(GB)**

(54) Method and apparatus for interfacing a system control unit for a multiprocessor system with the central processing units.

(57) A computer system includes a plurality of central processing units (CPUs), a main memory, and a system control unit (SCU) for controlling the transfer of data between the CPUs and main memory. In addition to main memory, each of the CPUs includes a high-speed cache of selected portions of the main memory. Accordingly, these is an inherent risk that data contained in the caches may be altered while the identical data contained in main memory remains in the unaltered state. This, of course, leads to data inconsistency problems. Thus, in order to avoid data inconsistency, the SCU effects control over all data transfers to ensure that multiple versions of the same data are not maintained in the computer system. Further, memory references can be speeded by accessing the high-speed CPU caches when the desired data exits in the cache of another CPU.

Fig.1

## METHOD AND APPARATUS FOR INTERFACING A SYSTEM CONTROL UNIT FOR A MULTIPROCESSOR SYSTEM WITH THE CENTRAL PROCESSING UNITS

The present application discloses certain aspects of a computing system that is further described in the following U.S. patent applications filed concurrently with the present application: Evans et al., AN INTERFACE BETWEEN A SYSTEM CONTROL UNIT AND A SERVICE PROCESSING UNIT OF A DIGITAL COMPUTER; Gagliardo et al., METHOD AND MEANS FOR INTERFACING A SYSTEM CONTROL UNIT FOR A MULTI-PROCESSOR SYSTEM WITH THE SYSTEM MAIN MEMORY; D. Fite et al., METHOD AND APPARATUS FOR RESOLVING A VARIABLE NUMBER OF POTENTIAL MEMORY ACCESS CONFLICTS IN A PIPELINED COMPUTER SYSTEM; D. Fite et al., DECODING MULTIPLE SPECIFIERS IN A VARIABLE LENGTH INSTRUCTION ARCHITECTURE; D. Fite et al., VIRTUAL INSTRUCTION CACHE REFILL ALGORITHM; Murray et al., PIPELINE PROCESSING OF REGISTER AND REGISTER MODIFYING SPECIFIERS WITHIN THE SAME INSTRUCTION; Murray et al., MULTIPLE INSTRUCTION PREPROCESSING SYSTEM WITH DATA DEPENDENCY RESOLUTION FOR DIGITAL COMPUTERS; D. Fite et al., PREPROCESSING IMPLIED SPECIFIERS IN A PIPELINED PROCESSOR; D. Fite et al., BRANCH PREDICTION; Fossum et al., PIPELINED FLOATING POINT ADDER FOR DIGITAL COMPUTER; Grundmann et al., SELF TIMED REGISTER FILE; Beaven et al., METHOD AND APPARATUS FOR DETECTING AND CORRECTING ERRORS IN A PIPELINED COMPUTER SYSTEM; Flynn et al., METHOD AND MEANS FOR ARBITRATING COMMUNICATION REQUESTS USING A SYSTEM CONTROL UNIT IN A MULTI-PROCESSOR SYSTEM; E. Fite et al., CONTROL OF MULTIPLE FUNCTION UNITS WITH PARALLEL OPERATION IN A MICROCODED EXECUTION UNIT; Webb, Jr. et al., PROCESSING OF MEMORY ACCESS EXCEPTIONS WITH PRE-FETCHED INSTRUCTIONS WITHIN THE INSTRUCTION PIPELINE OF A VIRTUAL MEMORY SYSTEM-BASED DIGITAL COMPUTER; Hetherington et al., METHOD AND APPARATUS FOR CONTROLLING THE CONVERSION OF VIRTUAL TO PHYSICAL MEMORY ADDRESSES IN A DIGITAL COMPUTER SYSTEM; Hetherington et al., WRITE BACK BUFFER WITH ERROR CORRECTING CAPABILITIES; Flynn et al., METHOD AND MEANS FOR ARBITRATING COMMUNICATION REQUESTS USING A SYSTEM CONTROL UNIT IN A MULTI-PROCESSOR SYSTEM; Chinnaswamy et al., MODULAR CROSSBAR INTERCONNECTION NETWORK FOR DATA TRANSACTIONS BETWEEN SYSTEM UNITS IN A MULTI-PROCESSOR SYSTEM; Polzin et al., METHOD AND APPARATUS FOR INTERFACING A SYSTEM CONTROL UNIT FOR A MULTI-PROCESSOR SYSTEM WITH INPUT/OUTPUT UNITS; Gagliardo et al., MEMORY CONFIGURATION FOR USE WITH MEANS FOR INTERFACING A SYSTEM CONTROL UNIT FOR A MULTI-PROCESSOR SYSTEM WITH THE SYSTEM MAIN MEMORY; and Gagliardo et al., METHOD AND MEANS FOR ERROR CHECKING OF DRAM-CONTROL SIGNALS BETWEEN SYSTEM MODULES.

This invention relates generally to an interface between functional components of a computer system and, more particularly, to an interface between a system control unit of a multiprocessor computer system and its associated central processing units (CPUs).

In the field of computer systems, it is not unusual for a system to include a plurality of central processing units (CPUs) operating in parallel to enhance the system's speed of operation. Typically, each of the CPUs operate on a particular aspect of a single computer program and will, therefore, require access to the same program and variables stored in memory. It can be seen that each of the CPUs requires access to a shared common main memory, as well as, input/output units (I/O). The I/O allows the computer system, in general, and the CPUs, in particular, to communicate with the external world. For example, the I/O includes such well known devices as disc and tape drives, communication devices, printers, plotters, workstations, etc.

This parallel operation presents some problems in the form of access conflicts to the shared memory and I/O. A system control unit (SCU) is employed to manage these inter-unit communications. The SCU links the CPUs to the main memory and to the I/O through a series of independent interfaces. Data requests are received by the SCU from each of the units which, owing to the parallel nature of the CPU operation, occur at unscheduled times, and in particular, at the same time. These requests for data transfer are scheduled according to an arbitration algorithm and processed through the appropriate interface to/from the identified unit.

Efficient communication between all system units ported into the SCU is critical to optimize parallel operation of the computer system. The speed of the interfaces is important to the overall operation of the computer system to ensure that a bottleneck of data does not develop. There is little point in individual units being able to operate at high speed if they must continually wait for data from other units.

The present invention provides an efficient, high-speed interface in a computer system having a plurality of central processing units, a main memory, and a system control unit for controlling the transfer of data between the central processing units and main memory, each of the central processing units having a cache for containing selected portions of the data maintained in the main memory. The system control unit comprises: means for receiving a request for data contained in a selected address of the main memory from one of the central processing units; means for initiating data retrieval from the main memory in response to receiving a data request; means for comparing the requested data address to the addresses of the data contained in each of the central processing unit caches and delivering one of a respective hit and miss signal in response to detecting a match and the absence of a match therebetween; means for aborting the data retrieval initiating means in response to receiving the hit signal; means for retrieving the requested data from the central processing unit cache and delivering the retrieved data to the requesting central processing unit cache in response to receiving a hit signal; and means for delivering the data retrieved from main memory to the requesting central processing unit cache in response to receiving the miss signal.

Other objects and advantages of the invention will become apparent upon reading the following detailed description and upon reference to the drawings in which:

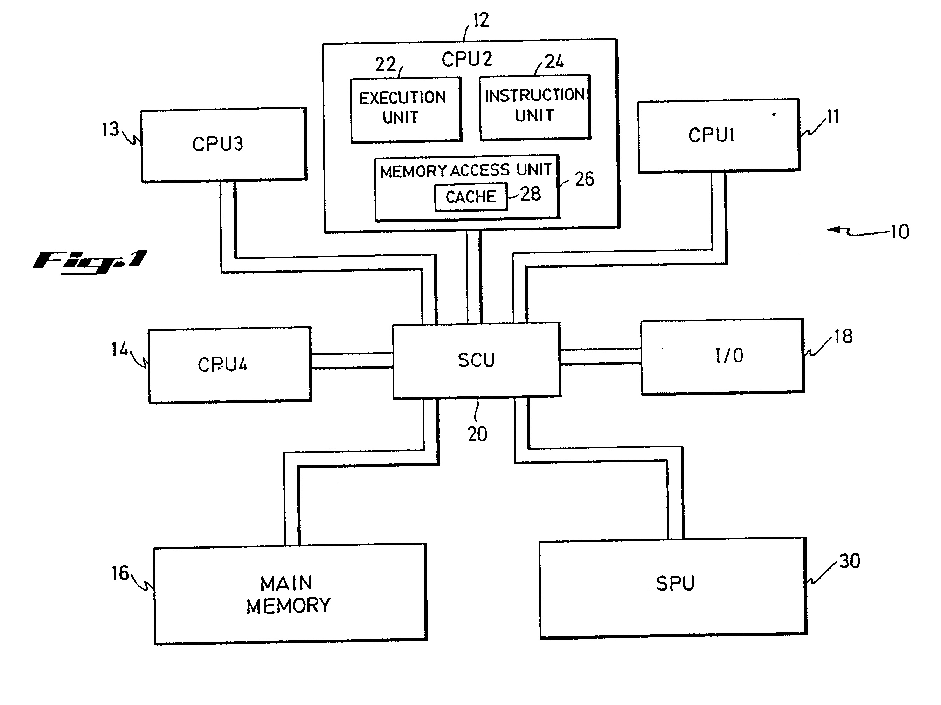

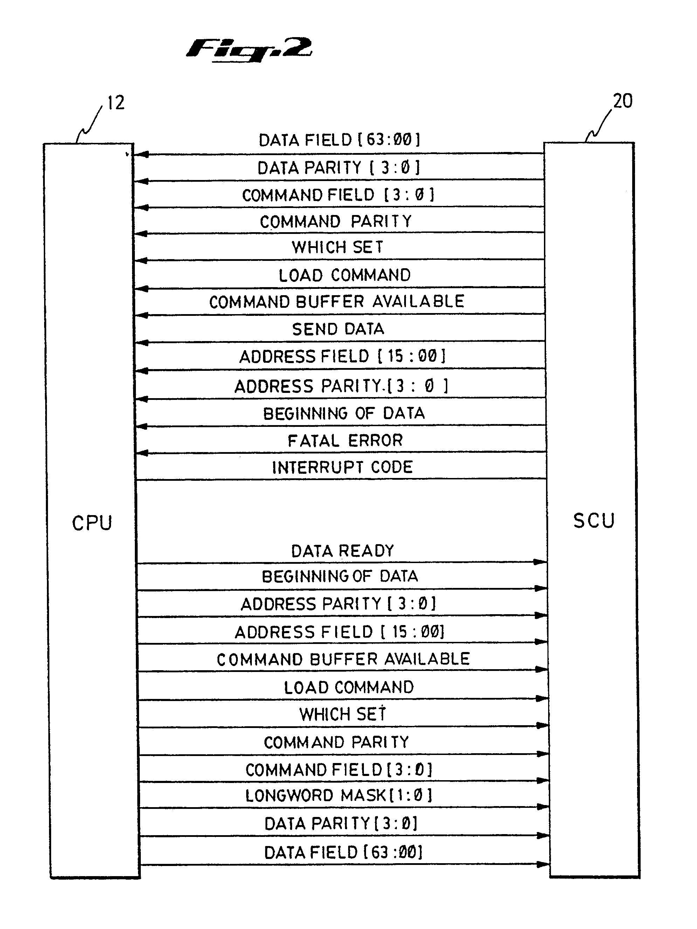

FIG. 1 is a top level block diagram of a computer system;

FIG. 2 is a general block diagram of the SCU - CPU interface;

FIG. 3 is a block diagram of the CPU control architecture portion of the interface; and

FIGS. 4 and 5 are block diagrams of the SCU control architecture portion of the interface.

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the spirit and scope of the invention as defined by the appended claims.

Turning now to the drawings and referring first to FIG. I, there is shown a top level block diagram of a multiprocessing computer system 10 which includes a plurality of central processing units (CPU1-CPU4) 11, 12, 13, 14. The CPUs require access to a shared common main memory 16, as well as, input/output units (I/O) 18. The I/O 18 allows the computer system 10, in general, and the CPUs, in particular, to communicate with the external world. For example, the I/O 18 includes such well known devices as disc and tape drives, communication devices, printers, plotters, workstations, etc.

To take full advantage of the multiple CPUs, the system is configured to allow CPU1-CPU4 to operate in parallel. This parallel operation presents some problems in the form of access conflicts to the shared memory 16 and I/O 18. A system control unit (SCU) 20 is employed to manage these inter-unit communications. The SCU 20 links CPU1-CPU4 to the main memory 16 and to the I/O 18 through a series of independent interfaces. Data requests are received by the SCU 20 from each of the units which, owing to the parallel nature of the CPU operation, occur at unscheduled times, and in particular, at the same time. These requests for data transfer are scheduled according to an arbitration algorithm and processed through the appropriate interface to/from the identified unit.

Inside the CPUs, the execution of an individual instruction is broken down into multiple smaller tasks. These tasks are performed by dedicated, separate, independent functional units that are optimized for that purpose.

Although each instruction ultimately performs a different operation, many of the smaller tasks into which each instruction is broken are common to all instructions. Generally, the following steps are performed during the execution of an instruction: instruction fetch, instruction decode, operand fetch, execution, and result store. Thus by the use of dedicated hardware stages, the steps can be overlapped, thereby increasing the total instruction throughput.

The data path through the pipeline includes a respective set of registers for transferring the results of each pipeline stage to the next pipeline stage. These transfer registers are clocked in response to a common system clock. For example, during a first clock cycle, the first instruction is fetched by hardware dedicated to instruction fetch. During the second clock cycle, the fetched instruction is transferred and decoded by instruction decode hardware, but, at the same time, the next instruction is fetched by the instruction fetch hardware. During the third clock cycle, each instruction is shifted to the next stage of the pipeline and a new instruction is fetched. Thus, after the pipeline is filled, an instruction will be completely executed at the end of each clock cycle.

This process is analogous to an assembly line in a manufacturing environment. Each worker is dedicated to performing a single task on every product that passes through his or her work stage. As each task is performed the product comes closer to completion. At the final stage, each time the worker performs his assigned task a completed product rolls of the assembly line.

To accomplish this pipelining of instructions, the CPUs are partitioned into at least three functional units:

the execution unit 22, the instruction unit 24, and the memory access unit 26. As its name suggests, the execution unit 22 is ultimately responsible for the actual execution of the instructions. The instruction unit 24 prefetches instructions, decodes opcodes to obtain operand and result specifiers, fetches operands, and updates the program counter.

The memory access unit 26 performs the memory related functions of the CPU. For example, the memory access unit 26 maintains a high-speed cache 28. The cache 28 stores a copy of a small portion of the information stored in main memory 16 and is employed to increase processing speed by reducing memory access time. The main memory 16 is constructed of lower cost and slower memory components. If the CPU were required to access main memory 16 during each memory reference, the overall speed of the CPU would be reduced to match the main memory speed since the CPU could not execute the instruction until the memory reference had returned the desired data. Accordingly, the cache 28 is constructed of high-speed, high-cost semiconductor memory components, but owing to its high cost, the cache contains considerably fewer storage locations than does main memory. These relatively few high-speed storage locations are used to maintain that portion of main memory which will be most frequently used by the CPU. Therefore, only those memory references which are not maintained in the cache 28 result in access to the main memory 16. Thus, the overall speed of the CPU is improved.

It should be noted that the memory maintained in the cache 28 changes as the program proceeds. For example, the memory locations which are frequently referenced at the beginning of the program may not be accessed in later stages of the program. Conversely, memory locations used frequently by the middle portion of the program may be of little use to the beginning or ending portions of the program. Thus, it can be seen that the contents of the cache 28 needs frequent updates from the main memory 16 and there is a need for efficient communication between the cache 28 and the SCU 20.

The SCU 20 also links the various system units to a service processor unit (SPU) 30 which performs traditional console functions. The SPU 30 has responsibility for status determination and control of the overall operation of the processing system. In particular, the SCU 20 provides the SPU 30 with means for communicating with the plurality of CPUs and provides access to all storage elements within the CPUs.

Efficient communication between all system units ported into the SCU 20 is critical to optimize parallel operation of the computer system 10. I/O can reference memory, the CPUs can reference memory, and the CPUs can reference I/O, but the bulk of the traffic is between the CPUs and the memory. The SCU 20 is the central switching station for all of the message packets throughout the system.

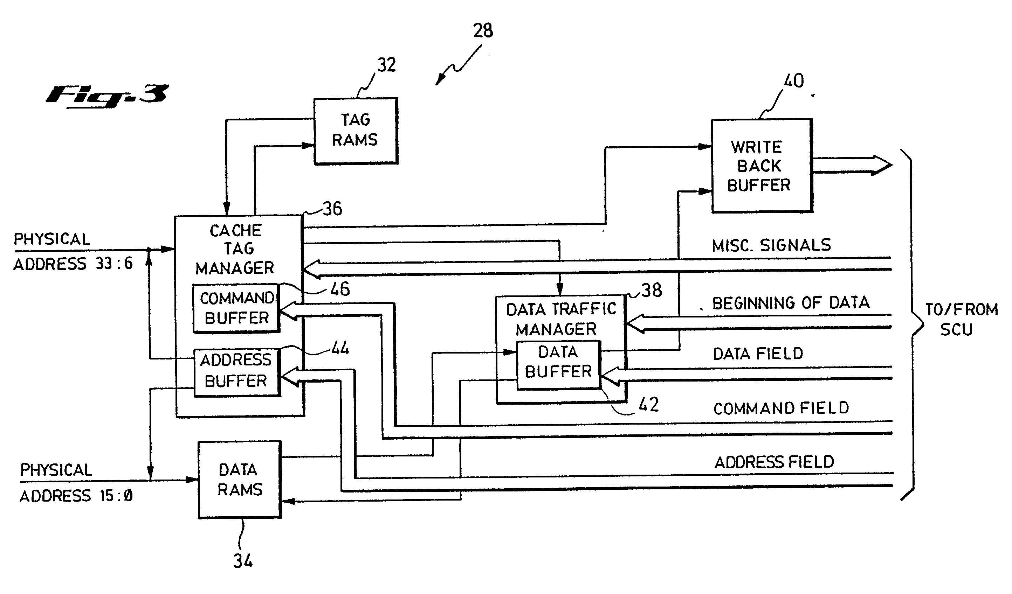

Referring now to FIG. 2, the interface between the SCU 20 and the CPU 12 and its corresponding signals are illustrated. It should be noted that while each of the signals is represented by a single line, the signals are actually transmitted as differential pairs to reduce noise coupling. Further, because the interface employs series terminated emitter coupled logic, none of the lines are bidirectional. The interface includes separate lines in each direction for transmitting the same type of signals. For example, the interface includes sixty-four lines for transmitting data from the CPU to the SCU and sixty-four lines for transmitting data from the SCU to the CPU. Each set of these sixty-four lines allows a full quadword of data (8 bytes) to be transmitted in a single clock cycle. The signals which are common to both the CPU and the SCU are discussed first, followed by similar discussions of each unit's unique signals. Parity signals also accompany the data signals. Once again, the parity signals are transmitted on separate lines by both units. The data parity is four bits wide, with each bit representing odd parity for a word of data (2 bytes). The receiving unit calculates the parity of the received data and compares this calculated parity to its corresponding data parity signal. If the two signals differ, then the receiving unit generates an error signal which causes an error recovery sequence to be initiated.

A four bit command field is also delivered by each unit. The command field includes sixteen separate commands which cause the receiving unit to perform a unique function. Table I lists the sixteen commands and their corresponding four-bit codes that the SCU issues to the CPU.

TABLE I

| SCU TO CPU COMMANDS | | |
|---|---|---|
| CODE | COMMAND | COMMENT |
| 0000 | GET DATA WRITTEN | 64 BYTES LONG |
| 0001 | GET DATA READ | 64 BYTES LONG |
| 0010 | GET DATA INVALIDATE | 64 BYTES LONG |
| 0011 | RETURN DATA READ | 64 BYTES LONG |
| 0100 | RETURN DATA WRITTEN | 64 BYTES LONG |
| 0101 | OK TO WRITE | |
| 0110 | INVALIDATE READ BLOCK | |
| 0111 | RETURN I/O REG DATA | 4 BYTES LONG |
| 1000 | RETURN READ ERROR STATUS | |
| 1001 | LOCK ACKNOWLEDGE | |
| 1010 | MEMORY READ NXM | |
| 1011 | I/O READ NXM | |
| 1100 | LOCK DENIED | |
| 1101 | INVALIDATE WRITTEN BLOCK | |
| 1110 | UNUSED | |
| 1111 | UNUSED | |

GET DATA WRITTEN is a command issued by the SCU when data requested by I/O is present in a CPU. The SCU sends this command to the CPU containing the desired data and passes that data to the requesting I/O. The tag store is not altered.

GET DATA READ is a command issued by the SCU when the data requested by one CPU is present and written in another CPU, but is only intended to be read by the requesting CPU. Data is transferred to the requesting CPU and marked as "read" in the CPU of origin.

GET DATA INVALIDATE is a command issued by the SCU to retrieve data from one CPU which has been requested by another CPU. However, in this case the requesting CPU intends to alter the data by writing to it once the data is placed in the requesting CPU cache. To avoid data consistency problems, the data which had been present and written in the first CPU is transferred to the requesting CPU and then invalidated to prevent the old version of that data from being considered to be the most recent version of that data. To invalidate the data, the CPU sets a single bit present in the appropriate memory location of the tag RAMS 32 of the cache 28.

RETURN DATA READ is a command issued by the SCU to return data having been read from memory.

RETURN DATA WRITTEN is a command issued by the SCU to return data having been written or altered by a CPU.

OK TO WRITE is a command issued in response to a CPU request to write to data which had previously been retrieved for read purposes only. In other words, the CPU now desires to write to data which it did not believe it would need to write. Thus, the SCU simply checks the other CPUs to determine that no other CPU is writing to that data. It is not necessary to return the actual data to the CPU, only to grant permission to write.

INVALIDATE READ BLOCK is a command which resets the valid bit for a block of data that had previously been retrieved for read purposes only. This occurs when another CPU desires to retrieve the same block of data for write purposes. Thus, to avoid data consistency problems, the read block is invalidated. It should be recognized that since another CPU has requested the data with an intent to alter that data, the version of that data maintained in the first CPU is likely to be different if not similarly modified data.

RETURN I/O REG DATA is a command issued to return I/O register data in response to a CPU request (READ I/O REG) for data from a designated I/O register.

RETURN READ ERROR STATUS is a command issued to return read error status information.

LOCK ACKNOWLEDGE and LOCK DENIED are alternative signals which are delivered by the SCU in response to a lock request by the CPU. The lock command is used by the CPU to perform the read portion of an interlock instruction. The SCU responds with either the LOCK ACKNOWLEDGE signal indicating that the request has been granted, or, conversely, LOCK DENIED when access has previously been granted to another CPU.

MEMORY and I/O READ NXM are commands issued by the SCU when the CPU attempts to read non-existent memory and I/O locations. It is possible for the CPU to generate a reference location that does not physically exist. In an actual implementation of a computer system the addressable memory space is generally larger than the size of the actual physical memory. For example, the 32-bit address field is capable of identifying four gigabytes of storage locations; however, because of the intended use of the computer system, only one gigabyte of memory might physically exist. Accordingly, any memory reference outside of the one gigabyte of physical memory results in the SCU sending the NXM command.

INVALIDATE WRITTEN BLOCK is substantially similar to the INVALIDATE READ BLOCK signal with the exception that this signal is intended to invalidate a block of data that was previously retrieved for write purposes. This occurs when I/O direct memory accesses conflict with written blocks in CPU caches.

Similarly, Table II lists the sixteen commands which the CPU issues to the SCU.

TABLE II

| CPU TO SCU COMMANDS | | |
|---|---|---|
| CODE | COMMAND | COMMENT |
| 0000 | READ REFILL | |
| 0001 | WRITE REFILL | |
| 0010 | READ REFILL LINKED | |
| 0011 | WRITE REFILL LINKED | |
| 0100 | WRITE REFILL LOCK | |
| 0101 | WRITE REFILL UNLOCK | |
| 0110 | SWEEP WRITEBACK | |
| 0111 | LONGWORD WRITE UPDATE | |
| 1000 | READ I/O REG | |
| 1001 | WRITE I/O REG | 4 BYTES LONG |
| 1010 | LINKED WRITEBACK | |
| 1011 | LONGWORD WRITE UPDATE LINKED | |
| 1100 | INVALIDATE | CACHE SWEEPS |
| 1101 | WRITE REFILL LINK LOCK | |
| 1110 | UNLOCK | |
| 1111 | UNUSED | |

READ REFILL is a command issued by the CPU when the CPU has attempted to read memory, but the memory location was not present in the cache 28. The SCU responds to the command by fetching the desired block of data and returning it to the requesting CPU. It should be noted, however, that the retrieved memory is for read purposes only. If the CPU wishes to write to that memory block it must obtain permission from the SCU to do so.

WRITE REFILL is a command issued when the CPU wishes to retrieve data from memory which it intends to alter by writing. The CPU issues this command for two separate reasons. First, WRITE REFILL is issued when the CPU attempts to write data into a block in the cache 28, but the data block is not present therein. The SCU returns the data block to the cache 28 and the CPU proceeds to write to the designated memory locations within the block of data. The second reason for issuing this command is when the CPU attempts to write to data which is present in the cache 28, but is present as the result of a READ REFILL. In this case, the SCU looks up in a set of its tag RAMs and discovers that the status of that block of data in that CPU is read only. The SCU does not send refill data, but instead returns an OK TO WRITE signal, which allows the CPU to proceed with the write operation. At this point it is sufficient to understand that the SCU maintains a list of each block of data stored in the cache 28 of each CPU in order to prevent memory access conflicts. As a general rule, the SCU will not allow multiple CPUs to contain a copy of the same memory block if any of the copies are present as the result of a LONGWORD WRITE UPDATE or a WRITE REFILL command. This provision is implemented to prevent a CPU from erroneously reading a stale copy of data from its own cache. For example, if another CPU has the ability to write to its copy of that same data, then the first CPU will read the old data which has not been similarly written.

READ REFILL LINKED is a command issued by the CPU which is similar to READ REFILL, but in this case there is a writeback associated with this refill. In other words, the cache data which is to be overwritten by the refill data has previously been written by the CPU. Since the CPU has altered the data, it only exists in its present form in that cache location. Thus, if it is overwritten by the refill, it will be lost. Accordingly, the CPU has a provision for writing that displaced data back to the main memory 16. This writeback will occur immediately after the refill is completed. Therefore, READ REFILL LINKED simply informs the SCU that, while it is currently performing a refill, a writeback operation will immediately follow.

WRITE REFILL LINKED is a command issued by the CPU which is like the READ REFILL LINKED except that the refill data is available to be written by the CPU. In other words, WRITE REFILL LINKED is initiated when the CPU attempts to write to the cache 28, but misses. Thus, the refill data will be immediately altered once it is stored in the cache 28.

WRITE REFILL LOCK is a command issued by the CPU when the read portion of an interlock instruction is to be executed. Similarly, WRITE REFILL UNLOCK is a command issued by the CPU when the write portion of an interlock instruction is to be executed. The interlock instruction is further described below.

SWEEP WRITEBACK is a command used by the CPU when an error has been detected and the CPU wishes to send all written data blocks to the main memory. The command is issued for each "written" block that is being sent to main memory during a "sweep" of the cache. Sweeps are typically performed in response to a detected hardware error.

LONGWORD WRITE UPDATE is a command issued by the CPU when it has just written an aligned longword to an invalid block. The command tells the SCU to update its copy of the CPU's tag store.

READ I.O REG is a command issued by the CPU when information contained in a designated I/O register is desired by the program currently executing in the CPU. This command is substantially similar to a READ REFILL command, but accesses an I/O register rather than a memory location. Up to four bytes of data are returned. The address field becomes a 28 bit address (<29:2>) while bits <33:30> become a mask field. In contrast to a read refill, the tag store in the SCU is not altered, since the tag store does not have entries which correspond to these addresses.

WRITE I.O REG is a command issued by the CPU when the program currently being executed by the CPU desires to send data to an external device by writing that data to an I/O register.

LINKED WRITEBACK is a command issued by the CPU when a written block is being replaced by a read refill, a write refill, or a longword write update.

LONGWORD WRITE UPDATE LINKED is a command issued by the CPU that is like LONGWORD WRITE UPDATE except that the CPU will displace some number of previously written bytes in that block. Thus, the CPU write necessarily generates a writeback to avoid losing that data.

INVALIDATE is a command issued by the CPU when an error has been detected and the CPU is sweeping its cache. The CPU sends a SWEEP WRITEBACK for each block that is written and INVALIDATE for each block that is read status.

WRITE REFILL LINK LOCK is a command issued by the CPU that is like WRITE REFILL LOCK except that the read for the lock causes a writeback.

Returning again to the description of the common signals delivered between the SCU and CPU as shown in FIG. 2, a COMMAND PARITY signal provides odd parity over the command field and a collection of individual signals. The SCU to CPU command parity signal reflects odd parity over the following signals: COMMAND FIELD, WHICH SET, LOAD COMMAND, COMMAND BUFFER AVAILABLE, SEND DATA, and FATAL ERROR. Likewise, the CPU to SCU COMMAND PARITY signal reflects odd parity over the following signals: COMMAND FIELD, WHICH SET, LOAD COMMAND, COMMAND BUFFER AVAILABLE, and DATA READY.

The cache 28 maintained in each of the CPUs is two-way set-associative. This means that two possible storage locations exist within the cache 28 for each main memory location. The CPUs employ an algorithm for determining which of the two memory locations to use; however, operation of the algorithm is autonomous to the CPU. Therefore, neither the SCU nor the CPU would know which set that the other is referring to when a command is received. Accordingly, the "WHICH SET" signal is also delivered to indicate the particular set that the command references. For example, an asserted value indicates set 1 while an unasserted value indicates set 0.

The LOAD COMMAND signal acts to clock the command field and the address field into the opposite unit. This signal is asserted only if a buffer is available in the opposite unit to receive the associated command and address fields. The CPU contains only a single command and address buffer. Therefore, the SCU can send only a single command and address and then must wait until the CPU asserts its command buffer available signal. Alternatively, the SCU contains three command and address buffers for each CPU.

8

Thus, each CPU can send up to three command/address pairs before having to wait for the SCU to return its command buffer available signal. Both the SCU and the CPU assert there command buffer available signals when its buffers have been emptied and are ready to receive an additional command/address pair.

Clearly, both the SCU and the CPU need to be able to deliver an address along with their data and command fields. The address field indicates which memory or cache location that the memory reference is intended to access. In this particular application, the physical memory can be as large as 4 gigabytes. Thus, in order to address all of the main memory, the address field must be at least thirty-two bits wide. The communication lines over which the address field is delivered are, however, only sixteen bits wide and must be double cycled to deliver the entire address. The first half of the address is sent in the same clock cycle as the command, and the second half of the address is delivered in the following clock cycle. Further, the transfer of data between the SCU and CPU is done in 64-byte blocks, and the lower order three bits of the address can be ignored since these bits are only indicative of byte locations within a quadword. The addresses can be to any quadword within the 64 byte block.

To ensure the accuracy of the address fields, both the SCU and the CPU provide parity signals along with the address field. The address parity field is four bits wide with each parity bit providing odd parity for four bits of the 16-bit address.

The final common signal between the SCU and the CPU is the BEGINNING OF DATA signal. The SCU generally sends data to the CPU in 64-byte blocks. Since the data field is 8-bytes wide, eight consecutive clock cycles are required to complete the transfer. The BEGINNING OF DATA signal is asserted during the first of these eight cycles and succeeds the LOAD COMMAND signal by three cycles.

The SCU to CPU portion of the interface includes three signals which are unique to it: SEND DATA; FATAL ERROR; and the INTERRUPT CODE. SEND DATA is a final handshaking signal, which is asserted by the SCU to force the CPU to begin sending data from its writeback buffer, or directly from its cache. FATAL ERROR is a signal which is asserted when the SCU has detected a fatal error and is about to assert an attention line to the SPU 22. The attention line signals the SPU 22 to begin recovering from the error. FATAL ERROR signals are sent to all four CPUs simultaneously, and cause the CPUs to stop processing. The final SCU to CPU signal is the interrupt signal. A single line is used with the interrupt code being serially encoded. A start bit is followed in seven subsequent cycles by the interrupt code, a parity bit across the interrupt code, and a stop bit.

The CPU to SCU portion of the interface includes two signals which are unique to it: DATA READY and LONGWORD MASK. The DATA READY signal is the companion handshaking signal to the SEND DATA signal. DATA READY is asserted by the CPU when it has received the data in response to a GET DATA command from the SCU. Use of this signal allows better utilization of the SCU resources since the SCU will not reserve the resources required for the get data writeback until receiving the DATA READY signal. The LONGWORD MASK signal is a two-bit wide field that is transmitted with each quadword of data and is used to indicate the status of each of the two longwords within the quadword of data, that is, whether they should be written to memory or not.

At this point the interplay of signals and flow of data between the SCU and CPU may best be described by way of example. Consider, for example, the GET DATA protocol. There are four possible scenarios which may be followed when the CPU receives a GET DATA command form the SCU. First, assume that the GET DATE address hits in the CPU cache and the writeback buffer is empty. Thus, the CPU moves the desired data into the writeback buffer and sends DATA READY. The SCU responds to the DATA READY signal with the SEND DATA signal. Thereafter, the CPU responds with the BEGINNING OF DATA signal and the actual data, thereby emptying the writeback buffer.

In the second scenario, assume that the GET DATA address hits in cache; however, the writeback buffer is full. The CPU responds to the GET DATA signal by sending the DATA READY signal. The SCU then sends the SEND DATA signal, intending to retrieve the data stored at the GET DATA address not the data stored in the writeback buffer. the CPU then responds with the BEGINNING OF DATA signal and the actual data directly from the cache bypassing the writeback buffer. Thereafter, the SCU will respond with a SEND DATA signal for the data contained in the writeback buffer, and the CPU will respond with a BEGINNING OF DATA signal and the actual data, emptying the writeback buffer. In the third scenario, the GET DATA address misses in the CPU cache; however, the writeback buffer is full. The assumption, in this case, is that the data for the GET DATA command is already coincidentally in the writeback buffer. The memory access unit 26 does not compare the address of the GET DATA command with the address of the data already in the writeback buffer. Rather, the CPU sends the DATA READY signal. The SCU responds with the SEND DATA signal, and the CPU sends a BEGINNING OF DATA signal and the actual data from the writeback buffer. Thereafter, the SCU sends the second SEND DATA signal for the previous GET DATA request, and the CPU sends a BEGINNING OF DATA signal and the actual data from the writeback buffer, emptying the buffer. It should be noted that, in this case, the CPU does not allow the writeback buffer to be overwritten until after it has sent the data to the SCU for the second time.

In the fourth scenario, the GET DATA address misses in the cache, and the writeback buffer is empty. This case should not happen and will be flagged as an error by the CPU.

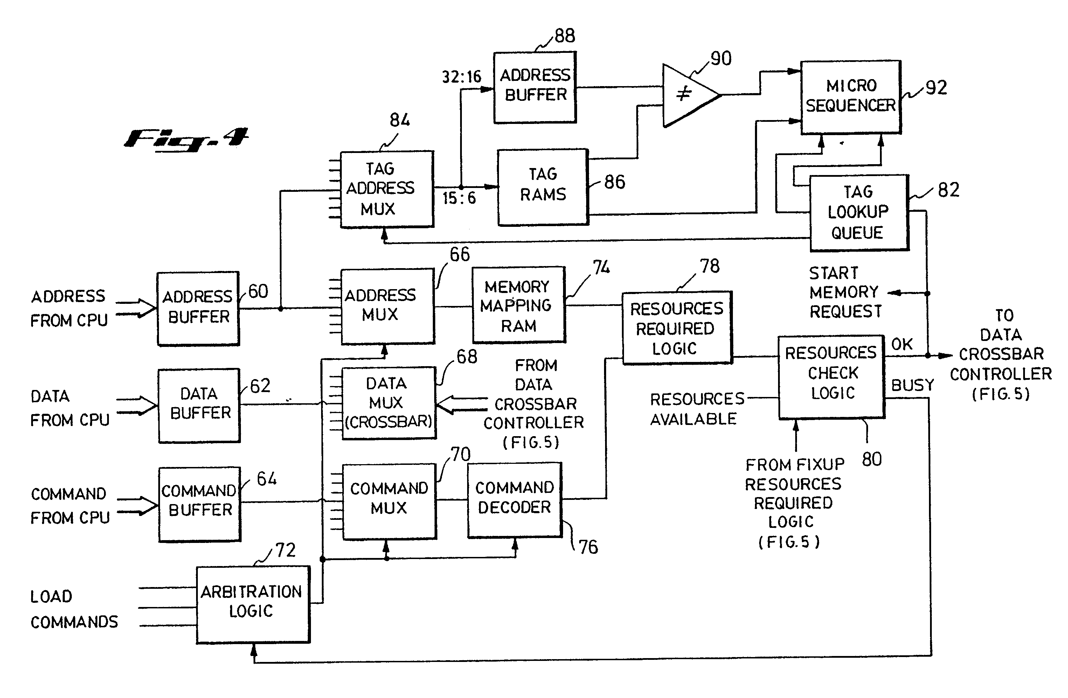

Referring now to FIG. 3, a block diagram of the CPU portion of the interface is illustrated. The cache 28 of the memory access unit 26 is shown to include a set of tag RAMs 32, a set of data RAMs 34, and a cache tag manager 36. As noted previously, the cache 28 is two-way set-associative. Thus, the data and tag RAMs are split in half with each half capable of storing the addresses of 1024 different memory locations. The data RAMs 34 contain the actual data stored at the locations identified in the tag RAMs 32. Bits 33:6 of the physical address are delivered to the cache tag manager 36. Bits 15:6 of the address are forwarded to the tag RAMs 32 to address the tag RAMs. Bits 33:16 are compared against the contents of the tag RAMs. Therefore, it can be seen that the arrangement of the cache 28 is to provide two storage locations for a much larger section of main memory 16.

Operation of the cache 28 begins with a memory request by, for example, the execution unit 22. The physical address of the desired memory location is delivered to the cache tag manager 36 which checks to determine if the data corresponding to that desired memory location is present in the data RAMs 34. Each of the two tag ram locations, where the address may have been stored, are consecutively recalled and compared to the physical address of the memory request. A "hit" or "miss" is communicated by the cache tag manager 36 to a data traffic manager (DTM) 38 which directs the flow of all data within the memory access unit 26. At the same time, bits 15:0 of the physical address are also delivered to the data RAMs 34. The data RAMs 34 respond to the address by delivering the contents of both corresponding memory locations to the DTM 38. The "hit" signal from the cache tag manager 36 also contains information on which of the sets within the cache 28 contains the desired data. Thus, in the event of a "hit", the DTM 38 properly selects which set of data delivered by the data RAMs 34 corresponds to the requested data. Conversely, on a cache "miss" the cache tag manager 38 initiates a memory refill from the main memory 16.

The memory access unit 26 also includes a write back buffer (WBB) 40, which, as discussed previously in conjunction with the WRITEBACK commands, is employed to prevent the loss of data during a cache refill. The WBB 40 is connected to the cache tag manager 36 from which it receives the LONGWORD MASK. The WWB 40 is also connected to the CTM 38 from which it receives the DATA FIELD and the PARITY FIELD. The WWB 40 delivers the LONGWORD MASK, the DATA FIELD and the PARITY FIELD over the interface to the SCU 20.

The cache tag manager 36 also receives information from the SCU 20. To facilitate this transfer of information, the cache tag manager 36 includes a pair of one-deep buffers 46, 44. The buffer 46 is a command buffer for holding command information, and the buffer 44 is an address buffer. The command field is 4-bits wide and is delivered in a single clock cycle, and therefore command buffer 46 is only 4-bits wide. Similarly, the address field is 32-bits wide (transferred as two consecutive 16-bit words), and the address buffer 44 is 32-bits wide to accommodate the entire address field.

The DTM 38 contains a single refill buffer 42. Its dimensions are 8 bytes wide per entry and it is eight entries deep. Transmissions of data from the SCU to the DTM 38 occur in eight consecutive cycles to achieve a 64 byte refill.

It should be noted that the SCU can only transfer a single group of related information and must then wait until the cache tag manager 36 has cleared the buffers 42, 44, 46 before sending additional information.

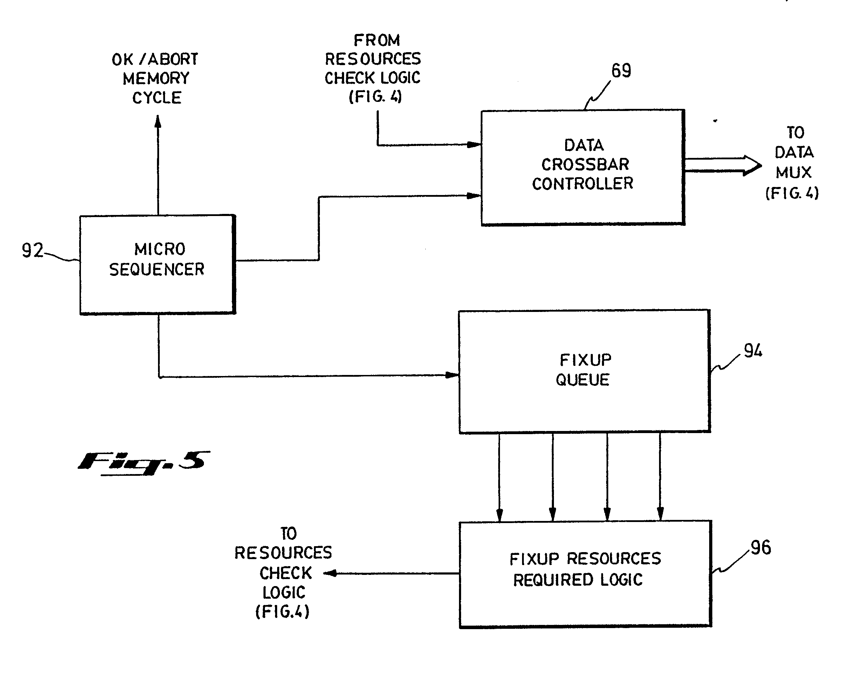

Referring now to FIG. 4, a block diagram of the SCU portion of the interface is illustrated. Unlike the CPU portion of the interface, the SCU includes multiple buffers for receiving information from each of the multiple CPUs. Preferably, the SCU includes three respective address buffers, one respective data buffer, and three respective command buffers for receiving information from each of the CPUs. For example, the SCU has a total of twelve address buffers 60, four data buffers 62, and twelve command buffers 64. It should be understood that, while only one of each type of buffer is shown in FIG. 4, the remaining buffers of each type are of a substantially identical construction.

Each of the twelve address and command buffers has an output connected to a respective twelve-to-one multiplexer 66, 68, 70. Arbitration logic 72 controls the select inputs of the address and command multiplexers 66, 60. The arbitration logic 72 also indirectly controls a data multiplexer 68 that makes the data path connections between the CPU's, I/O units, and main memory that are required to execute the command selected by the arbitration logic. The data multiplexer 68 preferably is in the form of a crossbar switch matrix controlled by a separate data crossbar controller (69 in FIG. 5). The preferred arbitration scheme implemented by the arbitration logic 72 is described in detail in the above referenced Flynn et al.

U.S. patent application Ser. No.          , filed          , and entitled "Method and Means for Arbitrating Communication Requests Using A System Control Unit In A Multi-Processor System," incorporated herein by reference. The preferred data multiplexer 68 and its associated data crossbar controller (69 in FIG. 5) are described in detail in the above referenced Chinnaswamy et al. U.S. patent application Ser. No.        , filed      , and entitled "Modular Crossbar Interconnection Network For Data Transactions Between System Units in a Multi-Processor System," incorporated herein by reference. With respect to the present invention, the relevant aspects of the arbitration logic 72 and the connection resources provided by the data multiplexer or crossbar 68 are described below in connection with the execution of the commands issued by the CPU's and recognized by the SCU.

The LOAD COMMAND signals from each of the CPUs are delivered across the interface to the inputs of the arbitration logic 72. As indicated previously, the CPU LOAD COMMAND signals act to clock the command field and the address field into the SCU. However, it should be remembered that the operation of each of the CPUs is autonomous; therefore, it is potentially possible to receive load commands from all of the CPUs simultaneously. Clearly, the SCU is incapable of processing all four of the commands in parallel, but rather, selects the order in which to process these multiple commands. The arbitration logic 72 performs this prioritizing scheme and selects one of the commands to begin processing immediately. Further, since there are a total of twelve buffers available, it is possible to actually have a total of eleven commands awaiting processing while one command currently undergoes execution by the SCU.

The output of the arbitration logic 72 is connected to the select inputs of the command and address multiplexers 66, 70. Thus, the LOAD COMMAND which wins arbitration will result in its corresponding address and command buffers being selected and passed through the multiplexers 66, 70. The address field is received by a memory mapping ram 74 which converts the raw address into a location definition used by the SCU. The main memory is organized into three levels of hierarchy: unit, segment, bank. There are two memory units with each memory unit containing two memory segments and each of the four memory segments having two memory banks. So there are a total of two memory units, four memory segments, and eight memory banks. Effectively, the output of the memory mapping ram 74 is a 3-bit field which defines which of the eights banks is being addressed.

The output of the command multiplexer 70 is connected to a command decoder 76. The command decoder 76 also receives the select signal from the arbitration logic 72. These two signals combined allow the decoder to determine the meaning of the 4-bit command field. The select signal is necessary to identify which unit issued the command. This is important because units other than the CPUs can also issue commands, and these other unit commands differ from the CPU commands. Accordingly, by "knowing" the command and its source, the decoder 76 determines what the command means.

This 3-bit memory mapping field and the decoded command are delivered to resources required logic 78. The resources required logic 78 performs the primary function of determining which SCU resources are required to perform the current command on the current address. The SCU resources include, for example, the memory banks, data paths, etc. which the SCU will employ to perform the desired command on the specified memory location. The output of the resources required logic is vectorized data having bits set therein to correspond to the particular resources needed.

Resources check logic 80 receives the resources required output and a resources available vectorized input. The resources available input is similar to the resources required output, but rather than reflecting the resources needed, it indicates the resources which are not currently being used. Each of the resources available to be used by the SCU includes an output (busy bit) which is set by the resource when that resource is active. The combination of all of the resource busy bits forms the resources available vectorized signal. The resources check logic 80 compares the resources required to those available. If all of the desired resources are available, such that the command could properly be executed, then the logic 80 delivers an OK signal and execution of the command begins. Otherwise, the logic 80 delivers a BUSY signal. This busy signal is communicated back to the arbitration logic 72 to indicate that the selected command cannot be executed at this time and that another command should be selected. The unexecutable command is not retired, but simply remains in its corresponding buffers with its LOAD COMMAND competing for arbitration during subsequent cycles.

The OK signal initiates the setting up of any required data paths by sending a signal to the data crossbar controller (69 in FIG. 5). For the execution of memory requests, the OK signal also initiates two other operations in the SCU. First, the memory request is started. However, it should be recognized that the data corresponding to the current address can be in the cache of another CPU. Therefore, the OK signal also initiates an attempt to retrieve data from that CPU cache instead of from main memory 16. For data consistency purposes, data which is present in another CPU cache is retrieved to ensure that the most current version of the data is used. Further, the process of determining whether the data is present in the cache of another CPU requires two clock cycles of operation, while retrieving data from main memory requires considerably more clock cycles. Thus, even when the data present in another cache is identical to the main memory data, it is a faster operation to retrieve the data from the CPU cache.

The purpose of starting the memory request before it is known whether the data is present in the cache of another CPU is to reduce the effective time required by a main memory request. For example, if the data is not present in the cache of another CPU, then the main memory request is allowed to continue and has begun processing two clock cycles before the cache status of the other CPUs was known. Conversely, if the data is present in the cache of another CPU, then the memory request is aborted. Therefore, starting the main memory request early has beneficial results when there are no cache conflicts.

For retrieving data from a CPU cache instead of main memory in response to a memory request, the OK output of the resources check logic 80 is fed to the input of a tag lookup queue 82. The tag lookup queue temporarily stores memory reference requests. Temporary storage is desired because the cache lookup requires two clock cycles to complete operation while it is possible for a LOAD COMMAND to be arbitrated on each clock cycle. Therefore, a temporary storage location is needed to prevent the arbitration logic 72 from stalling. The tag lookup queue 82 is preferably configured to maintain four consecutive cache lookup requests.

The information maintained in the queue includes the select address signal delivered by the arbitration logic 72 when the LOAD COMMAND corresponding to this cache lookup won arbitration.

This select address signal is delivered to the select input of a tag address multiplexer 84. The inputs to the tag address multiplexer 84 are shared in common with the inputs to the address multiplexer 66. Accordingly, the output of the tag address multiplexer 84 is identical to the output of the address multiplexer 66 when its corresponding LOAD COMMAND won arbitration. In other words, the output of the tag address multiplexer 84 is the address which corresponds to the current tag lookup.

In order to determine whether the data requested by the CPU exists in the cache of any of the other parallel CPU's the output of the tag address multiplexer 84 is compared to the addresses of the data contained in each of the CPU caches. Bits 15:6 of the output of the tag address multiplexer is connected to a set of tag RAM 86. This 10 bit address identifies the tag RAM location corresponding to the selected address from the CPU. Thus the tag RAM 86 delivers bits 32:16 of the address of the data which is currently stored in the cache of one of the data which is currently stored in the cache of one of the other parallel CPU's. At the same time, bits 32:16 from the tag address multiplexer 84 are placed in a buffer 88 awaiting completion of retrieval from the tag RAM 86. Both of the upper 17- bits of the addresses from the address buffer 88 and the tag RAM 86 are delivered to inputs of a 17 bit comparator 90. In this manner, the comparator 90 produces an asserted signal when the address stored in the tag RAM 86 corresponds to the address requested from the CPU. Conversely, the comparator 90 produces an unasserted value when there is a miss between the address CPU and the address in the tag RAM 86. It should be recognized that the tag RAM 86, address buffer 88, and comparator 90 are replicated four times, one instance corresponding to each CPU cache. The outputs of each of the four comparators 90 are delivered to a microsequencer 92.

The tag RAM 86 corresponds to the tag RAM 32 contained in each of the memory access units of the CPU's. The tag RAM 86, 32 contain identical information and allow the SCU to keep track of the memory addresses currently contained in the CPU caches. Accordingly, the tag RAM 86 like the tag RAM 32 is also two-way set-associative. This two-way set-associative aspect of the tag RAM 86 accounts for the cache lookup requiring two clock cycles to complete operation. Since the tag RAM 86 is two-way set-associative, each comparison requires comparing the addresses stored in set zero and set 1 in consecutive cycles.

At this point the signals from the comparators 90 merely indicate whether there is a hit or miss for the data requested by one CPU in the caches of the remaining CPU's. In order to determine whether a hit results in data consistency problems, the type of command being executed by the requesting CPU must be known, as well as, the state of the data in the "hit" CPU. Where the requesting CPU desires the data for WRITE REFILL purposes, then there is the risk of data inconsistency if the data is allowed to remain in the "hit" CPU and also placed in the requesting CPU. For example, if the requesting CPU merely wants to accomplish a READ REFILL and the data is in a read state in the "hit" CPU, there is no data inconsistency problem. Accordingly, the tag RAM 86 also stores a pair of cache data bits that indicate one of four states: invalid; read; written partial; or written full. These cache data bits are also delivered from the tag RAM 86 to the microsequencer 92. Likewise, the original command is also stored in the tag lookup queue 82 and passed to the microsequencer 92.

The microsequencer 92 has sufficient inputs to determine whether the requested data exists in a parallel CPU cache and, if so, whether such a request produces data inconsistency problems. Accordingly, the microsequencer now has the option to abort the memory request initiated by the OK signal from the resources check lock 80 or allowing the memory request to continue operation. The microsequencer 92 will, of course, abort the memory request only if the requested data is found to be written in one of the parallel CPU caches. Otherwise, the memory request continues to its logical conclusion and returns data to the requesting CPU. Thus, by initiating the memory request before checking to see if the requested data is present in any of the parallel CPU caches, the relatively slow process of a memory request obtains a two cycle head start.

Referring now to FIG. 5, the microsequencer 92 is shown connected to a fixup queue 94. At this point the microsequencer 92 is capable of performing two alternative functions. First, the microsequencer 92 can allow the memory cycle to continue operating and retrieve the desired data from the indicated address in response to a "miss" in each of the CPU caches. Alternatively, the microsequencer 92 can also proceed to retrieve the desired data from the CPU cache in which the hit was detected and move that data to the requesting CPU cache. It should be recognized that in order to accomplish this transfer of data between CPU caches certain resources, such as, data paths, address paths, command paths, and miscellaneous other resources are required. So, in order to execute this "fixup" the resources necessary to accomplish the "fixup" must be determined and inquiry must be made into as to whether these resources are currently available.

Accordingly, the microsequencer produces a resource required vector and places that vector in the fixup queue 94. The fixup queue 94 includes four locations for storing for resources required vectors. Periodically, fixup resources required logic 96 removes one of the resources required vectors from the fixup queue 94 and reserves those resources, thereby precluding the memory startup logic from using these same resources. Therefore, even if the required resources are currently busy, by reserving them from future use they will eventually become available to accomplish the desired movement of data between the requesting CPU cache and the "hit" CPU cache.

This reservation of resources is accomplished by sending this resources required vector to the resource check logic. This effectively indicates to the resource logic that these resources are currently unavailable. Thus, a subsequent memory request which requires some of the same resources will produce a busy signal from the resource check logic and place that memory request back into the arbitration logic. In this manner, those memory requests which do not interfere with the resources required to accomplish the fixup are allowed to continue. Whereas, those memory requests that do conflict are given a lower priority so that the fixup can be accomplished.

## Claims

1. A computer system having a plurality of central processing units, a main memory, a system control unit for controlling the transfer of data between the central processing units and main memory, each of the central processing units having a cache for containing selected portions of the data maintained in the main memory, said system control unit comprising:
means for receiving a request for data contained in a selected address of the main memory from one of the central processing units;
means for initiating data retrieval from the main memory in response to receiving a data request;
means for comparing the requested data address to the addresses of the data contained in each of the central processing unit caches and delivering one of a respective hit and miss signal in response to detecting a match and the absence of a match therebetween;
means for aborting the data retrieval initiating means in response to receiving the hit signal;
means for retrieving the requested data from the central processing unit cache and delivering the retrieved data to the requesting central processing unit cache in response to receiving a hit signal; and
means for delivering the data retrieved from main memory to the requesting central processing unit cache in response to receiving the miss signal.

2. A method for controlling the transfer of data between central processing units and main memory in a computer system, each of the central processing units having a cache for containing selected portions of the data maintained in the main memory, said method comprising the steps of:
receiving a request for data contained in a selected address of the main memory from one of the central processing units;
comparing the requested data address to the addresses of the data contained in each of the central processing unit caches and delivering one of a respective hit and miss signal in response to detecting a match and the absence of a match therebetween;
retrieving the requested data from the respective central processing unit cache and delivering the retrieved data to the requesting central processing unit in response to the hit signal; and

delivering the requested data retrieved from main memory to the requesting central processing unit in response to the miss signal.

3. The method of claim 2, wherein data retrieval from the main memory is initiated in response to receiving the request for data, and wherein the data retrieval from the main memory is aborted in response to receiving the hit signal.

Fig.1

EP 0 380 842 A2

# Fig.2

CPU 12 — SCU 20

| | |
|---|---|
| DATA FIELD [ 63 : 00 ] | ← |
| DATA PARITY [ 3 : 0 ] | ← |
| COMMAND FIELD [ 3 : 0 ] | ← |
| COMMAND PARITY | ← |
| WHICH SET | ← |
| LOAD COMMAND | ← |
| COMMAND BUFFER AVAILABLE | ← |
| SEND DATA | ← |
| ADDRESS FIELD [ 15 : 00 ] | ← |
| ADDRESS PARITY [ 3 : 0 ] | ← |
| BEGINNING OF DATA | ← |
| FATAL ERROR | ← |
| INTERRUPT CODE | ← |
| DATA READY | → |
| BEGINNING OF DATA | → |
| ADDRESS PARITY [ 3 : 0 ] | → |
| ADDRESS FIELD [ 15 : 00 ] | → |
| COMMAND BUFFER AVAILABLE | → |
| LOAD COMMAND | → |
| WHICH SET | → |
| COMMAND PARITY | → |
| COMMAND FIELD [ 3 : 0 ] | → |
| LONGWORD MASK [ 1 : 0 ] | → |
| DATA PARITY [ 3 : 0 ] | → |
| DATA FIELD [ 63 : 00 ] | → |

*Fig-3*

TO/FROM SCU

WRITE BACK BUFFER — 40

MISC. SIGNALS

BEGINNING OF DATA

DATA FIELD

COMMAND FIELD

ADDRESS FIELD

28

DATA TRAFFIC MANAGER — 38

DATA BUFFER — 42

TAG RAMS — 32

36

46

44

CACHE TAG MANAGER

COMMAND BUFFER

ADDRESS BUFFER

DATA RAMS — 34

PHYSICAL ADDRESS 33:6

PHYSICAL ADDRESS 15:0

*Fig.4*

ADDRESS FROM CPU → ADDRESS BUFFER /60

DATA FROM CPU → DATA BUFFER /62

COMMAND FROM CPU → COMMAND BUFFER /64

LOAD COMMANDS → ARBITRATION LOGIC /72

TAG ADDRESS MUX /84

ADDRESS BUFFER /88

TAG RAMS /86

ADDRESS MUX /66

DATA MUX (CROSSBAR) /68

COMMAND MUX /70

COMMAND DECODER /76

MEMORY MAPPING RAM /74

RESOURCES REQUIRED LOGIC /78

RESOURCES CHECK LOGIC /80

MICRO SEQUENCER /92

TAG LOOKUP QUEUE /82

32:16

15:6

≠ /90

FROM DATA CROSSBAR CONTROLLER (FIG.5)

RESOURCES AVAILABLE

FROM FIXUP RESOURCES REQUIRED LOGIC (FIG.5)

START MEMORY REQUEST

OK

BUSY

TO DATA CROSSBAR CONTROLLER (FIG.5)

EP 0 380 842 A2

Fig. 5

OK / ABORT
MEMORY
CYCLE

FROM
RESOURCES
CHECK LOGIC
(FIG. 4)

69

DATA
CROSSBAR
CONTROLLER

TO
DATA
MUX
(FIG. 4)

92

MICRO
SEQUENCER

FIXUP
QUEUE

94

TO
RESOURCES
CHECK
LOGIC
(FIG. 4)

FIXUP RESOURCES
REQUIRED LOGIC

96

EP 0 380 842 A2